# EUROPEAN PATENT APPLICATION

(11) **EP 4 350 039 A2**
(43) Date of publication of application: **10.04.2024**
(21) Application number: 23194828.2
(22) Date of filing: 01.09.2023
(51) Int. Cl.: C25B 1/04, C25B 9/23, C25B 9/77, C25B 11/031, C25B 11/052, C25B 11/056, C25B 11/063, C25B 11/081

(54) **ELECTRODE, MEMBRANE ELECTRODE ASSEMBLY, ELECTROCHEMICAL CELL, STACK, AND ELECTROLYZER**

(30) Priority: 03.10.2022 JP 2022159823
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: FUKAZAWA, Taishi, Tokyo (JP); YOSHINAGA, Norihiro, Tokyo (JP); SUGANO, Yoshitsune, Tokyo (JP)
(74) Representative: Marks & Clerk LLP

(57) **Abstract**

An electrode of an embodiment includes : a power feeder layer including an electric conductive material, the power feeder layer including a porous structure including porosity of 40% or more and 60% or less; and a catalyst layer provided on the power feeder layer, the catalyst layer including a porous catalyst layer including a porous precious metal or sheet-like precious metal.

## Description

### CROSS-REFERENCE TO RELATED APPLICATION

This application is based upon and claims the benefit of priority from Japanese Patent Application No.2022-159823, filed on October 3, 2022, the entire contents of which are incorporated herein by reference.

### FIELD

Embodiments described herein relate generally to an electrode, a membrane electrode assembly, an electrochemical cell, a stack and an electrolyzer.

### BACKGROUND

In recent years, research on electrochemical cells has actively been conducted. Among the electrochemical cell, for example, polymer electrolyte water electrolysis cells (PEMEC:Polymer Electrolyte MembraneElectrolysis Cell) are expected to be used as hydrogen-generation devices for large-scale energy-storage systems. In order to ensure sufficient durability and electrolytic characteristics, noble metal catalysts such as platinum (Pt) nanoparticle catalysts for the cathode of PEMEC and iridium (Ir) nanoparticle catalyst for the anode are commonly used. In addition, a method of obtaining hydrogen from ammonia has been studied.

### BRIEF DESCRIPTION OF THE DRAWINGS

FIG. 1 is a schematic cross-sectional view of the membrane electrode assembly of a first embodiment.
FIGS. 2A-C are photomicrographs of the catalyst unit of the first embodiment.
FIG. 3 is a schematic diagram illustrating a process for analyzing a first power feeder layer according to the first embodiment.
FIG. 4 is a schematic diagram of the electrochemical cell according to the second embodiment.
FIG. 5 is a schematic diagram of the stack according to a third embodiment.
FIG. 6 is a schematic diagram of the electrolyzer of a fourth embodiment.

### DETAILED DESCRIPTION

An electrode of an embodiment includes a power feeder layer including an electric conductive material, the power feeder layer including a porous structure including porosity of 40% or more and 60% or less; and a catalyst layer provided on the power feeder layer, the catalyst layer including a porous catalyst layer including a porous precious metal or sheet-like precious metal.

Hereinafter, embodiments will be described with reference to the drawings. In the drawings, the same or similar parts are denoted by the same or similar reference numerals.

The physical property values herein are values at 25 [°C] and at 1 [atom]. The thickness of each member is an average value of the distances in the lamination direction.

### (First Embodiment)

An electrode the present embodiment includes a power feeder layer including an electric conductive material, the power feeder layer including a porous structure including porosity of 40% or more and 60% or less; and a catalyst layer provided on the power feeder layer, the catalyst layer including a porous catalyst layer including a porous precious metal or sheet-like precious metal.

Hereinafter, in the embodiment, the water electrolysis will be described as an example.

Note that the electrolyzer of the embodiment can be used for the electrolyzer of ammonia. The membrane electrode assembly 100 of the embodiment can be used as the membrane electrode assembly of the electrolyzer for synthesizing ammonia. The electrolyzer of the embodiment is available for the electrolyzer used for the electrolysis of ammonia synthesis in which ultrapure water is supplied to the anode, the water is decomposed at the anode to produce proton and oxygen, the produced proton passes through the electrolyte membrane, and nitrogen supplied to the cathode, the proton and the electron are connected to produce ammonia.

The operation method of the electrolyzer of the embodiment can be used for the operation method of the electrolyzer which electrolyzes ammonia to produce hydrogen. The membrane electrode assembly 100 can be used in a device for electrolyzing ammonia to produce hydrogen. The operation method of the electrolyzer of the embodiment is available for the operation method of the electrolyzer used for the electrolysis of ammonia synthesis in which ultrapure water is supplied to the anode, the water is decomposed at the anode to produce proton and oxygen, the produced proton passes through the electrolyte membrane, and nitrogen supplied to the cathode, the proton and the electron are connected to produce ammonia.

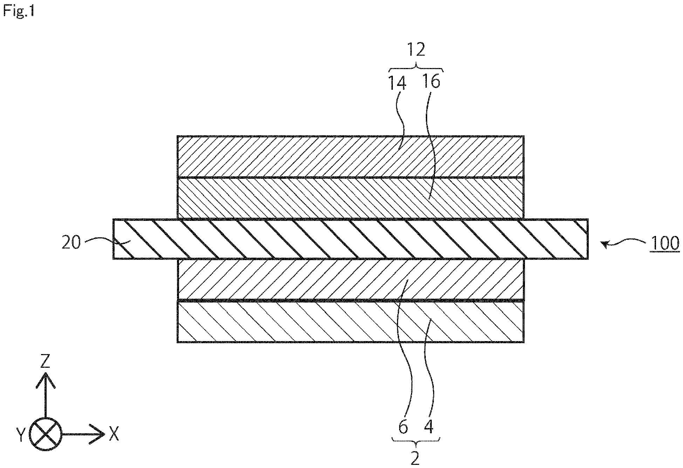

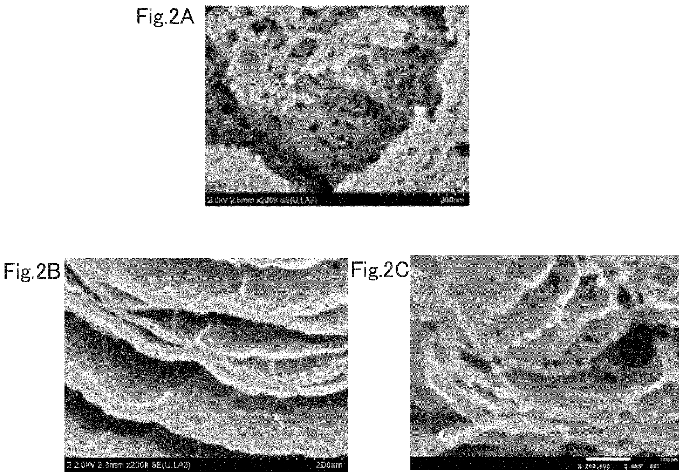

FIG. 1 is a schematic cross-sectional view of a membrane electrode assembly 100 according to the present embodiment. FIG. 2 is a micrograph of the catalyst unit of the present embodiment.

The membrane electrode assembly 100 of the present embodiment will be described with reference to FIGS. 1 and 2.

The membrane electrode assembly 100 includes a first electrode 2, a second electrode 12, and an electrolyte membrane 20.

Note that "the first electrode" is an exemplary electrode. "The first power feeder layer" is an exemplary power feeder layer. "The first catalyst layer" is an exemplary the catalyst layer.

The first electrode 2 is an anode electrode. The first electrode 2 has a first power feeder layer 4 and a first catalyst layer 6.

The second electrode 12 is a cathode electrode. The second electrode 12 includes a second power feeder layer 14 and a second catalyst layer 16.

The electrolyte membrane 20 is provided between the first electrode 2 and the second electrode 12. The first catalyst layer 6 is provided between the first power feeder layer 4 and the electrolyte membrane 20. The second catalyst layer 16 is provided between the second power feeder layer 14 and the electrolyte membrane 20.

Here, the X-direction (X-axis), the Y-direction (Y-axis) intersecting perpendicularly to the X-direction (X-axis), and the Z-direction (Z-axis) intersecting perpendicularly to the X-direction (X-axis) and the Y-direction (Y-axis) are defined. The first power feeder layer 4, the first catalyst layer 6, the electrolyte membrane 20, the second power feeder layer 14, and the second catalyst layer 16 extend in the X direction and the Y direction, for example. The first power feeder layer 4, the first catalyst layer 6, the electrolyte membrane 20, the second power feeder layer 14, and the second catalyst layer 16 extend in the X direction and the Y direction, for example. The first electrode 2, the electrolyte membrane 20, and the second electrode 12 are stacked in the Z-direction, for example.

The first power feeder layer 4 is preferably porous and highly conductive. The first power feeder layer 4 is a porous member that passes through gases and fluids. The first power feeder layer 4 is, for example, a carbon paper or a metal mesh. As the metal mesh, a porous substrate of the valve metal is preferable. The porous substrate of the valve metal is preferably the porous substrate containing one or more metals selected from the group consisting of titanium, aluminum, tantalum, niobium, hafnium, hafnium, zirconium, zinc, tungsten, bismuth, and antimony, or the porous substrate of one metal selected from the group consisting of aluminum, tantalum, niobium, hafnium, zirconium, zinc, tungsten, bismuth, and antimony.

The porosity of the first power feeder layer 4 is preferably 40% or more and 60% or less.

When the first power feeder layer 4 of the present embodiment is used as an anode of the water electrolyzer, it is particularly preferably that the first power feeder layer 4 is the porous substrate of the valve metal that contains titanium (Ti). This is because it is difficult to deteriorate when an oxidation reaction occurs.

The first power feeder layer 4 is preferably a metal non-woven fabric having the fiber diameter of 1 [µm] or more and 100 [µm] or less. If the fiber diameter is less than 1 [µm], the fiber diameter is too thin to maintain the strength of the first power feeder layer 4. On the other hand, when the fiber diameter is larger than 100 [µm], the fiber diameter is too thick, making it difficult to increase the porosity of the first power feeder layer 4 to the above range.

The porosity and the fiber diameter of the first power feeder layer 4 are determined as follows. The first power feeder layer 4 alone is obtained by stripping the first power feeder layer 4 from the membrane electrode assembly 100 if the first power feeder layer 4 is a part of the membrane electrode assembly 100. It should be noted that a part of the fibers of the first power feeder layer 4 is allowed to be partially removed during such release. If metal oxide particles or metal particles, such as catalyst particles of the first power feeder layer 6, are included in the first catalyst layer 4, the metal oxide particles and/or metal particles may not be removed if the weight of such metal oxide particles and/or metal particles is negligible (e.g., if the total mass of metal oxide particles and/or metal particles is included to less than or equal to 0.5 [wt %], based on the mass of the first power feeder layer 4, as estimated by microscopy). When the metal oxide particles and/or the metal particles are frequently contained in the first power feeder layer 4, a part of the first power feeder layer 4 is removed, for example, in an area in which the metal oxide particles and/or the metal particles are contained, by a focused ion beam (Focused Ion Beam:FIB).

In this way, the volume V1 [cm3] and the mass V [g] of the obtained first power feeder layer 4 are determined. In addition, a density p1 [g/cm3]=V/V1 is obtained.

A portion of the fibers of the first power feeder layer 4 are collected and analyzed on a ICP mass spectrometer (Inductively Coupled Plasma-Mass Spectrometer:ICP-MS). In this way, the composition of the collected fibers of the first power feeder layer 4 is determined. Here, such a fiber is regarded as a metal or an alloy without voids, and the density p2[g/cm3] of the fiber is determined. Then, porosity [%] is obtained from p1/p2.

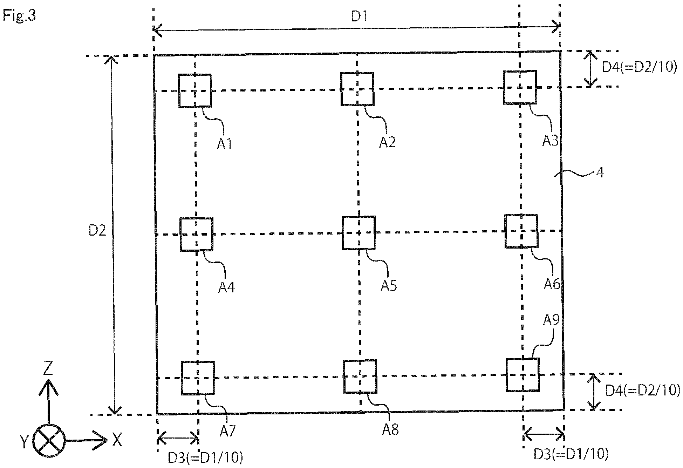

To determine the fiber diameter dB, the surface of the first power feeder layer 4 is observed using light microscopy. The surface of the first power feeder layer 4 is observed at a magnification of 10× to 1000×. If the first power feeder layer 4 is a part of the membrane electrode assembly 100, the surface stuck to the first catalyst layer 6 is observed. If the first power feeder layer 4 is not a part of the membrane electrode assembly 100, either side may be observed. The position to be observed is shown in FIG. 3. The extent of 10[mm]×10[mm] around the position of A1-A9 in FIG. 3 is observed. The fiber diameter and fiber length of the fibers are determined after selecting the 10th longest fiber from the longest fiber included in the observed range and identifiable in the observed range. The average value of the fiber diameter and the mean of the fiber diameter for all nine assay spots are calculated. The average value of the seven values using the maximum value and the minimum value of the mean of the fiber diameter obtained is the fiber diameter of the first power feeder layer 4.

The thickness of the first power feeder layer 4 is preferably 50 [µm] or more and 2000 [µm] or less.

The film thickness of the first power feeder layer 4 can be measured by the stylus profiler or observation using a microscope such as an optical microscope or a scanning-electron microscope (Scanning Electron Microscope:SEM).

The first catalyst layer 6 is provided between the first power feeder layer 4 and the electrolyte membrane 20. The first catalyst layer 6 includes catalyst metal. The first catalyst layer 6 is preferably a particle of the catalyst metal, wherein the catalyst metal is not supported on the carrier. The first catalyst layer 6 preferably includes a porous catalyst layer or a laminated structure including porous structure or void layers. The catalyst metal is not particularly limited, and preferably contains, for example, one or more selected from the group consisting of Ir, Ru and Pt. The catalyst metal is preferably a metal, an alloy or a metal oxide.

The metallic content per area of the first catalyst layer 6 is preferably not less than 0.02[mg/cm2] and not more than 1.0[mg/cm2], more preferably not less than 0.05[mg/cm2] and not more than 0.5[mg/cm2]. The sum of the masses can be measured, for example, by ICP-MS.

The film thickness of the first catalyst layer 6 is, for example, 0.1 [µm] or more and 2 [µm] or less.

The porosity of the first catalyst layer 6 is preferably 10 [%] or more and 90 [%] or less, more preferably 30 [%] or more and 70 [%] or less.

It should be noted that an intermediate layer (not shown) may be provided between the first power feeder layer 4 and the first catalyst layer 6.

As the second power feeder layer 14, it is preferable to use a porous and highly conductive material. The second power feeder layer 14 is a porous member that passes through gases and fluids. The second power feeder layer 14 is, for example, the carbon paper or the metal mesh. As the metal mesh, the porous substrate of the valve metal is preferable. The porous substrate of the valve metal is preferably the porous substrate containing one or more metals selected from the group consisting of titanium, aluminum, tantalum, niobium, hafnium, zirconium, zinc, tungsten, bismuth, and antimony, or the porous substrate of one metal selected from the group consisting of titanium, aluminum, tantalum, niobium, hafnium, zirconium, zinc, tungsten, bismuth, and antimony.

The second catalyst layer 16 includes catalytic metal. The second catalyst layer 16 is preferably a particle of the catalyst metal, wherein the catalyst metal is not supported on the carrier. The second catalyst layer 16 is preferably the porous catalyst layer. The catalyst metal is not particularly limited, and includes, for example, one or more selected from the group consisting of Pt, Rh, Os, Ir, Pd and Au. It is preferable for the catalyst metal to include at least one selected from the group consisting of such catalyst materials. The catalyst metal is preferably a metal, an alloy or a metal oxide.

The metallic content per area of the second catalyst layer 16 is preferably not less than 0.02[mg/cm2] and not more than 1.0[mg/cm2], more preferably not less than 0.05[mg/cm2] and not more than 0.5[mg/cm2]. The sum of the masses can be measured, for example, by ICP-MS.

The porosity of the second catalyst layer 16 is preferably 10 [%] or more and 90 [%] or less, and more preferably 30 [%] or more and 70 [%] or less.

The film thickness of the second catalyst layer 16 is, for example, 0.1 [µm] or more and 20 [µm].

FIG. 2A shows a SEM(Scanning Electron Microscope) image of the porous catalyst layer including the porous precious metal or sheet-like precious metal. FIG. 2B and FIG. 2C show SEM images of the porous catalyst layer porous structures including the porous precious metal or sheet-like precious metal. In laminated structure including the void layers, it is preferable that the adjacent nanosheets are partially integrated with each other. Introduction of the nanoceramic material layer into laminated structure or disposing a porous nanocarbon layer containing fibrous carbon between adjacent nanosheets or material layers can improve durability and robustness. The porous catalyst layer containing such porous precious metal or sheet-like precious metal can be used in the first catalyst layer 6 and the second catalyst layer 16.

It should be noted that an intermediate layer (not shown) may be provided between the second power feeder layer 14 and the second catalyst layer 16.

The electrolyte membrane 20 is a proton-conducting membrane. The electrolyte membrane 20 is preferably a fluorine-based polymer or an aromatic hydrocarbon-based polymer having at least one or more selected from the group consisting of a sulfonate group, a sulfonimide group, and a sulfate group. The electrolyte membrane 20 is preferably a fluorine-based polymer having a sulfonate group. As the fluorine-based polymer including a sulfonic acid group, for example, Nafion (trademark, manufactured by DuPont Corporation), Flemion (trademark, manufactured by Asahi Kasei Co.), Selemion (trademark, manufactured by Asahi Kasei Co.), Aquavion (aquivion) (trademark, Solvay Specialty Polymers Co.), or Aciplex (trademark, manufactured by Asahi Glass Co.), etc. can be used.

The film thickness of the electrolyte membrane 20 can be appropriately determined in view of characteristics such as permeation characteristics and durability of the film. The thickness of the electrolyte membrane 20 is preferably not less than 20 [µm] and not more than 500 [µm], more preferably not less than 50 [µm] and not more than 300 [µm], and even more preferably not less than 80 [µm] and not more than 200 [µm], from the viewpoints of strength, dissolution resistance, and power properties of the membrane electrode assembly.

The electrolyte membrane 20 preferably includes a precious metal region on the side of the first electrode 2. The precious metal region includes the precious metal particle. The precious metal region is preferably present on the surface of the electrolyte membrane 20. The precious metal region is preferably composed of one region, but may be composed of a plurality of separate regions.

The precious metal particle is preferably a particle of one or more precious metals selected from the group consisting of Pt, Re, Rh, Ir, Pd and Ru. The precious metal particle may include alloy particle including one or more precious metals selected from the group consisting of Pt, Re, Rh, Ir, Pd and Ru. The precious metal particle is preferably a precious metal particle selected from the group consisting of Pt, Re, Rh, Ir, Pd and Ru. The precious metal particle is preferably a Pt particle. The precious metal particle is preferably a Re particle. The precious metal particle is preferably a Rh particle. The precious metal particle is preferably a Ir particle. The precious metal particle is preferably a Pd particle. The precious metal particle is preferably a Ru particle.

The precious metal particle oxidizes hydrogen generated at the second electrode 12 and passes through the electrolyte membrane 20. Hydrogen leakage can be suppressed by the precious metal particle. Since the precious metal particle is present on the side of the first electrode 2, it is difficult to oxidize the hydrogen discharged from the cathode side. It should be noted that the region in which the precious metal particle exists may also be provided in the electrolyte membrane 20 on the side of the second electrode 12.

Next, the operation and effect of the present embodiment will be described.

The porous catalyst layer including the porous precious metal or sheet-like precious metal is the catalyst layer that provides excellent properties, particularly when used as the catalyst layer for the electrolyzer. However, it was not clear what power feeder layer should be used for the catalyst layer of the electrolyzer. For example, in the case of the anode electrode for the water electrolyzer, the water is supplied and the oxygen is discharged. Here, the water is supplied in a liquid state. On the other hand, the oxygen is discharged in a gaseous state. In this way, the first power feeder layer 4 is required to be able to deliver and discharge a plurality of elements, i.e., gas and liquid. Furthermore, it was not clear what type of the first power feeder layer 4 would be required if the first power feeder layer 4 is combined with the porous catalyst layer including the porous precious metal or the sheet-like precious metal.

The porosity of the first power feeder layer 4 is preferably 40% or more and 60% or less. In the first power feeder layer 4, if the porosity of the first power feeder layer 4 is less than 40%, porosity is too low so that the water-diffusion and oxygen-diffusion is not made uniform. Therefore, the diffusion overvoltage cannot be sufficiently lowered. On the other hand, if the porosity of the first power feeder layer 4 is greater than 60%, the porosity is too high, so that the water is likely to be excessively supplied to only a part of the first catalyst layer 6. Further, if the porosity of the first power feeder layer 4 is greater than 60%, the porosity is too high, so that excessive excretion of oxygen from only a part of the first catalyst layer 6 is likely to occur. Therefore, the diffusion overvoltage cannot be sufficiently lowered.

The first power feeder layer 4 is preferably the metal non-woven fabric containing titanium (Ti) and having the fiber diameter of 1 [µm] or more and 100 [µm] or less. If the fiber diameter is less than 1 [µm], the fiber diameter is too thin, making it difficult to maintain the strength of the first power feeder layer 4. On the other hand, when the fiber diameter is larger than 100 [µm], the fiber diameter is too thick, making it difficult to increase porosity of the first power feeder layer 4 to the above range.

The thickness of the first power feeder layer 4 is preferably 50 [µm] or more and 2000 [µm] or less. If the film thickness of the first power feeder layer 4 is less than 50 [µm], the film thickness is too thin, so that the water reaches the first catalyst layer 6 prior to successful water diffusion in the first power feeder layer 4. Therefore, the diffusion overvoltage cannot be sufficiently lowered. In addition, when the film thickness of the first power feeder layer 4 is less than 50 [µm], the film thickness is too thin, so that oxygen is discharged to the outside of the first power feeder layer 4 prior to the oxygen being uniformly diffused. On the other hand, when the film thickness of the first power feeder layer 4 is larger than 2000 [µm], since the film thickness is too thick, it is difficult for water to diffuse through the first power feeder layer 4 and reach the first catalyst layer 6. Further, when the film thickness of the first power feeder layer 4 is larger than 2000 [µm], the film thickness is too thick, so that it is difficult for the oxygen to diffuse through the first power feeder layer 4 and be discharged to the outside of the first power feeder layer 4.

According to the electrode of the present embodiment, it is possible to provide an electrode having high characteristics. According to the membrane electrode assembly of the present embodiment, it is possible to provide a membrane electrode assembly having high characteristics.

### (Second Embodiment)

An electrochemical cell of the present embodiment is an electrochemical cell including the membrane electrode assembly of the first embodiment. Descriptions of the contents overlapping with those of the first embodiment will be omitted.

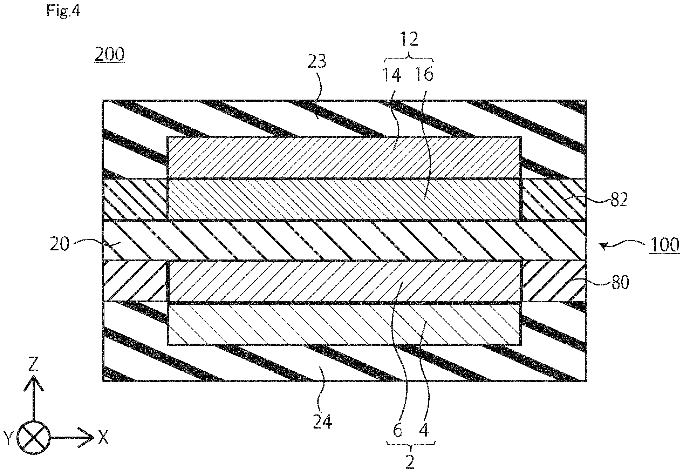

FIG. 4 is a schematic cross-sectional view of the electrochemical cell 200 according to the present embodiment. The electrochemical cell 200 will be described below using water electrolysis as an example, but hydrogen can be generated by decomposing ammonia or the like in addition to water.

The electrochemical cell 200 of the present embodiment includes the membrane electrode assembly 100, a separator 23, a separator 24, a seal 80, and a seal 82.

For example, water is supplied to the first electrode 2. In the first electrode 2, protons, oxygens, and electrons are generated from water. In the second electrode 12, the protons produced in the first electrode 2 react with electrons to produce hydrogen. One or both of the generated hydrogen and oxygen are used as fuel for a fuel cell, for example. With the separator 23 and the separator 24, the membrane electrode assembly 100 is tightened in the Z and -Z directions.

According to the electrochemical cell 200 of the present embodiment, a highly reliable the electrochemical cell 200 can be obtained.

### (Third Embodiment)

A stack of the present embodiment is a stack including the membrane electrode assembly 100 of the first embodiment. Here, descriptions of contents overlapping with those of the first embodiment and the second embodiment will be omitted.

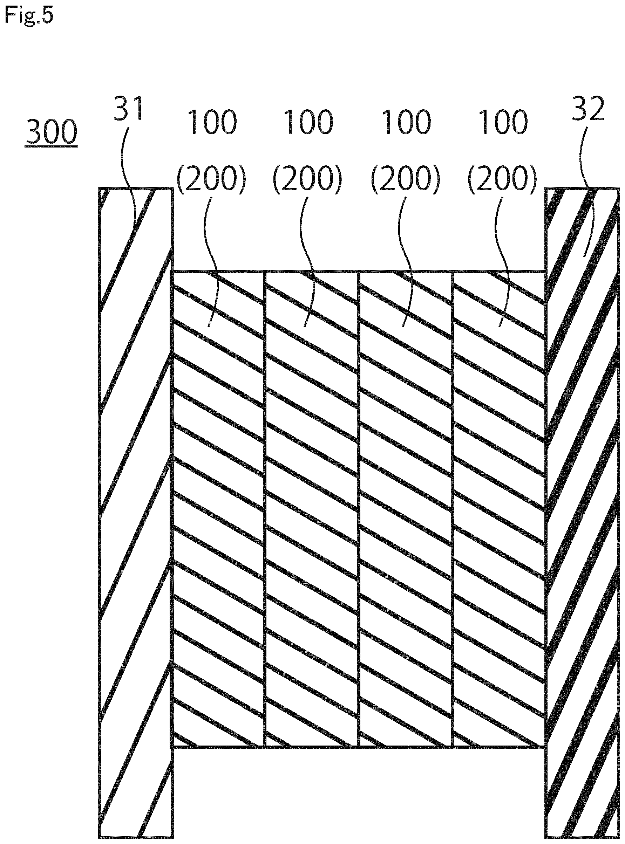

FIG. 5 is a schematic cross-sectional view showing the stack 300 of the present embodiment. The stack 300 includes a plurality of the membrane electrode assembly 100 or the electrochemical cell 200 connected in series. The clamping plate 31 and clamping plate 32 are attached to both ends of the membrane electrode assembly 100 or the electrochemical cell 200.

According to the stack 300 of the present embodiment, a long-life the stack 300 can be obtained.

### (Fourth Embodiment)

A fourth embodiment relates to the electrolyzer. Descriptions of the contents overlapping with those of the first to third embodiments will be omitted.

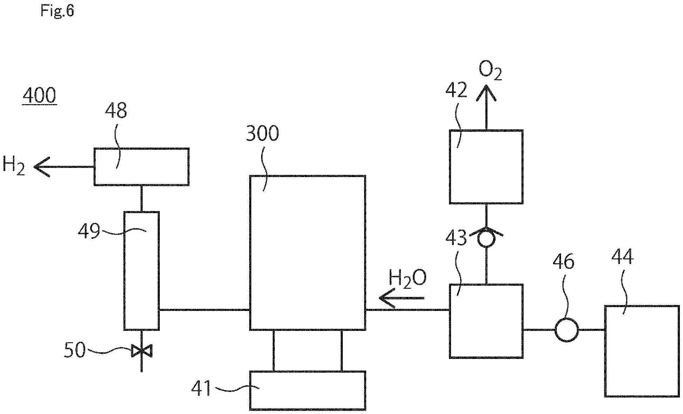

FIG. 6 is a schematic diagram of the electrolyzer 400 according to the present embodiment. The electrolyzer 400 is, for example, a hydrogen-generating device. The electrolyzer 400 includes the electrochemical cell 200 or the stack 300. The electrolyzer 400 is, for example, the electrolyzer for water electrolysis. For example, in the electrolyzer in which hydrogen is generated from ammonia, it is preferable to employ a device having a different configuration using the membrane electrode assembly 100.

The power supply 41 is attached to the stack 300. The power supply 41 applies a voltage to the stack 300. A gas-liquid separator 42 and a mixing tank 43 are connected to the anode-side of the stack 300 to separate the generated gases from the unreacted water. The mixing tank 43 is pumped by a pumping device 46 from an ion exchanged water producing apparatus 44 which supplies water. From the gas-liquid separator 42 through the check valve 47, the mixture is mixed at the mixing tank 43 and circulated to the anode.

Oxygen produced at the anode becomes oxygen gas after passing through the gas-liquid separator 42. On the other hand, a hydrogen purification device 49 connected to the gas-liquid separator 48 is used to produce high-purity hydrogen from the cathode. Impurities are discharged through a path having a valve 50 connected to the hydrogen purification device 49. In order to stably control the operating temperature, it is possible to heat the stack and the mixing tank and to control the current density at the time of thermal decomposition.

According to the electrolyzer 400 of the present embodiment, a long-life the electrolyzer 400 can be obtained.

### (Examples)

Hereinafter, Examples will be described.

### Preparation of Anode (the first electrode 2)

A Ti nonwoven substrate sized 25 [cm] ×25 [cm] and having a thickness of 200 [µm] was prepared as the first power feeder layer 4. Here, the porosity, the fiber diameter of the Ti nonwoven substrate and the thickness of the first power feeder layer were appropriately adjusted. The first power feeder layer 4 was sputtered with nickel/iridium by sputtering to form sheet layers. Then, only nickel was sputtered to form a gap layer. Laminated structure was obtained so that the step of forming the sheet layer and the gap layer was repeated 40 times so that Ir per area was 0.2[mg/cm2]. Subsequently, it was washed with sulfuric acid to obtain a nickel-removed catalytic structure (the first catalyst layer 6). As a result, the first electrode 2 was obtained.

### Preparation of cathode (the second electrode 12)

The carbon paper Toray060 (manufactured by Toray Industries, Inc.) having a 25[cm]×25[cm] and a thickness of 190 [µm] was prepared as the second power feeder layer 14. On the second power feeder layer 14, the catalyst layer having a laminated structure including void layers was formed by a sputtering method so as to have a Pt (platinum)-catalyst loading-density 0.1 [mg/cm2], and the catalyst layer having the porous catalyst layer was formed. As a result, the second electrode 12 was obtained.

### Forming the electrolyte membrane 20

A Nafion115 of the electrolyte membrane 20 sized 30[cm]×30[cm] was used. Solutions of tetraammineplatinum diluted with water to 11 [wt %] were sprayed. A tape-masked Nafion115 was used prior to spraying. After 10 minutes from spraying, the electrolyte membrane 20 was rinsed with pure water and finally boiled at 80°C in 10wt% nitric acid for 1 hour to obtain Pt grain-impregnated electrolyte membrane.

The first electrode 2, the second electrode 12 and the electrolyte membrane 20 described above were then placed in a hot press. Pressing was performed at 160[°C], 20[kg/cm2] for 3 minutes. Thereafter, press-cooling was performed at 25 [°C] and 20[kg/cm2] for 3 minutes. As a result, the membrane electrode assembly 100 was obtained.

Next, the membrane electrode assembly 100 was subjected to steady-state water electrolysis at 80 [°C] and a current density of 2 [A/cm2]. The anodes were fed with ultrapure water at flow rate of 0.05[L/min]. The diffusion overvoltage of the first electrode was then measured after 48 hours of operation. Here, in order to measure the diffusion overvoltage, the separation of the overvoltage was performed using the separately measured cell resistances and cell voltages between the first electrode 2 and the second electrode 12.

**[Table 1]**

| | First Electrode | | | | Diffusion overvoltage[m V] |
|---|---|---|---|---|---|
| | | First power feeder layer | | | |
| | First catalyst layer | Porosity[%] | Fiber diameter[*µ* m] | Thickness of first power feeder layer[*µ* m] | |
| Example 1 | Porous catalyst layer | 40 | 50 | 200 | 30 |
| Example 2 | Porous catalyst layer | 45 | 50 | 200 | 28 |
| Example 3 | Porous catalyst layer | 50 | 50 | 200 | 29 |
| Example 4 | Porous catalyst layer | 55 | 50 | 200 | 34 |
| Example 5 | Porous catalyst layer | 60 | 50 | 200 | 32 |
| Example 6 | Porous catalyst layer | 50 | 0.5 | 200 | 40 |
| Example 7 | Porous catalyst layer | 50 | 1 | 200 | 31 |
| Example 8 | Porous catalyst layer | 50 | 30 | 200 | 29 |
| Example 9 | Porous catalyst layer | 50 | 100 | 200 | 31 |
| Example 10 | Porous catalyst layer | 50 | 130 | 200 | 42 |
| Example 11 | Porous catalyst layer | 50 | 50 | 30 | 45 |
| Example 12 | Porous catalyst layer | 50 | 50 | 1000 | 31 |
| Example 13 | Porous catalyst layer | 50 | 50 | 2000 | 32 |
| Example 14 | Porous catalyst layer | 50 | 50 | 2500 | 45 |
| Comparative Example 1 | Catalyst support used | 50 | 50 | 200 | 75 |
| Comparative Example 2 | Porous catalyst layer | 35 | 50 | 200 | 70 |
| Comparative Example 3 | Porous catalyst layer | 65 | 50 | 200 | 68 |

As shown in Table 1, in the first electrode of Example 1 to Example 14, the diffusion overvoltage was good at less than 50[mV].

On the other hand, in the first electrode of Comparative Example 1, since the catalyst support (carbon black balcan XC-72) was used for the first catalyst layer 6, the diffusion overvoltage was 75mV and large. In the first electrode 2 of Comparative Example 2, since porosity of the first power feeder layer 4 was as small as 35%, the diffusion overvoltage was as large as 70mV. In the first electrode 2 of Comparative Example 3, since porosity of the first power feeder layer 4 was as large as 65%, the diffusion overvoltage was as large as 68mV.

In particular, a low diffusion overvoltage was obtained in Example 1, Example 2, Example 3, Example 4, Example 5, Example 7, Example 8, Example 9, Example 11, Example 12, and Example 13, where the fiber diameter of the first power feeder layer is not less than 1 micrometer and not more than 100 micrometers, and the thickness of the first power feeder layer is not less than 50 micrometers and not more than 2000 micrometers.

While certain embodiments and examples have been described, these embodiments and examples have been presented by way of example only, and are not intended to limit the scope of the inventions. These novel embodiments can be implemented in various other forms, and various omissions, replacements, and modifications can be made without departing from the gist of the invention. These embodiments and variations thereof fall within the scope and spirit of the invention, and fall within the scope of the invention described in the claims and equivalents thereof.

The above-described embodiments can be summarized in the following technical proposals.

### (Technical proposal 1)

An electrode comprising;
a power feeder layer including an electric conductive material, the power feeder layer including a porous structure including porosity of 40% or more and 60% or less; and
a catalyst layer provided on the power feeder layer, the catalyst layer including a porous catalyst layer including a porous precious metal or sheet-like precious metal.

### (Technical proposal 2)

The electrode according to technical proposal 1, wherein the power feeder layer is a metal non-woven fabric having the fiber diameter of 1 µm or more and 100 µm or less.

### (Technical proposal 3)

The electrode according to technical proposal 1 or 2, wherein the thickness of the power feeder layer is 50 µm or more and 2000 µm or less.

### (Technical proposal 4)

A membrane electrode assembly using the electrode according to any one of technical proposals 1 to 3.

### (Technical proposal 5)

An electrochemical cell using the electrode according to any one of technical proposals 1 to 3.

### (Technical proposal 6)

A stack using the electrode according to any one of technical proposals 1 to 3.

### (Technical proposal 7)

An electrolyzer using the electrode according to any one of technical proposals 1 to 3.

While certain embodiments have been described, these embodiments have been presented by way of example only, and are not intended to limit the scope of the inventions. Indeed, electrodes, the membrane electrode assembly, the electrochemical cell, the stack, and the electrolyzer described herein may be embodied in a variety of other forms; furthermore, various omissions, substitutions and changes in the form of the devices and methods described herein may be made without departing from the spirit of the inventions. The accompanying claims and their equivalents are intended to cover such forms or modifications as would fall within the scope and spirit of the inventions.

## Claims

1. An electrode comprising;
a power feeder layer including an electric conductive material, the power feeder layer including a porous structure including porosity of 40% or more and 60% or less; and
a catalyst layer provided on the power feeder layer, the catalyst layer including a porous catalyst layer including a porous precious metal or sheet-like precious metal.

2. The electrode according to claim 1, wherein the power feeder layer is a metal non-woven fabric having the fiber diameter of 1 µm or more and 100 µm or less.

3. The electrode according to claim 1 or 2, wherein the thickness of the power feeder layer is 50 µm or more and 2000 µm or less.

4. A membrane electrode assembly using the electrode according to any one of claims 1-3.

5. An electrochemical cell using the electrode according to any one of claims 1-3.

6. A stack using the electrode according to any one of claims 1-3.

7. An electrolyzer using the electrode according to any one of claims 1-3.
